# EUROPÄISCHE PATENTSCHRIFT

(11) **EP 0 738 616 B1**
(45) Veröffentlichungstag und Bekanntmachung des Hinweises auf die Patenterteilung: **21.10.1998**
(21) Anmeldenummer: 96890059.7
(22) Anmeldetag: 29.03.1996
(51) Int. Cl.: B60C 11/03, B60C 11/04, B60C 9/22

(54) **Fahrzeugreifen**
Vehicle tyre
Bandage pneumatique pour véhicule

(30) Priorität: 21.04.1995 AT 686/95
(43) Veröffentlichungstag der Anmeldung: 23.10.1996
(73) Patentinhaber: Semperit Reifen Aktiengesellschaft, A-2514 Traiskirchen (AT)
(72) Erfinder: Lux, Friedrich, Dipl.-Ing., 2700 Wr. Neustadt (AT); Sergel, Horst, Dipl.-Ing., 30657 Hannover (DE); Lindemann, Dieter, Dipl.-Ing., 30916 Isernhagen (DE)
(74) Vertreter: Vinazzer, Edith, Dipl.-Ing.

(56) Entgegenhaltungen:
- EP-A- 0 590 526
- EP-A- 0 646 480
- FR-A- 2 336 266
- FR-A- 2 608 516

## Beschreibung

Die vorliegende Erfindung betrifft einen Fahrzeugreifen mit einem profilierten Laufstreifen, mit einem Paar von Seitenwänden, einem Paar von verstärkten Wulstbereichen, einer zumindest einlagigen Karkasse und einem Gürtel aus mindestens zwei, Festigkeitsträger aufweisenden Lagen, wobei der Laufstreifen eine breite, zentrale, in Umfangsrichtung umlaufende und die Äquatorialebene des Reifens einschließende Ausnehmung besitzt.

Fahrzeugluftreifen, die derartige Laufstreifen besitzen, sind in verschiedenen Ausführungsformen bekannt. So ist beispielsweise in der EP-A 508090 ein Fahrzeugluftreifen dargestellt und beschrieben, welcher eine als Wasserkanal (Aqua-Channel) bezeichnete und entlang des Reifenäquators verlaufende Umfangsrille besitzt, die, in der Bodenaufstandsfläche des Reifens betrachtet, eine Breite von 10 bis 20 % der Latschabdruckbreite des Reifens besitzt und einen etwa V-förmigen Querschnitt aufweist. Die Tiefe des Wasserkanales beträgt zwischen 78 und 100 % der Gesamtlaufstreifentiefe. Der Laufstreifen ist beidseitig des Wasserkanales durch weitere sowohl in Umfangsrichtung verlaufende Rillen als auch durch Querrillen, die jeweils etwa entlang eines schwach gekrümmten S verlaufen und einerends in den Wasserkanal hineinverlaufen und anderends in den Schulterbereichen enden, gegliedert. Die Gliederung des Laufstreifens mit diesen Nuten verleiht dem Laufstreifenprofil eine Blockstruktur, was von vielen anderen herkömmlichen Laufstreifenprofilen für Reifen bekannt ist.

Aus der DE-A 3643046 ist ferner ein Fahrzeugluftreifen mit einem drei Laufstreifenbänder aufweisenden Laufstreifen bekannt, von welchen eines entlang des Reifenäquators verläuft. Die drei Laufstreifenbänder sind durch Umfangskanäle voneinander getrennt, deren Breite etwa ein Fünftel der Gesamtlaufflächenbreite beträgt. Die Laufstreifenbänder sind mit Profilrippen versehen oder ausschließlich durch Feineinschnitte gegliedert bzw. profiliert. Durch diese Laufstreifenausgestaltung soll die Geräuschemmission, insbesondere das Vorbeifahrgeräusch, deutlich herabgesenkt werden. Sowohl der im Laufstreifen gemäß der EP-A 508090 vorgesehene Wasserkanal als auch die aus der DE-A 3643046 bekannten Umfangskanäle sollen eine gute Wasseraufnahme und Wasserableitung sicherstellen. EP-A-646 480 zeigt einen Fahrzeugluftreifen mit den Merkmalen des Oberbegriffs des Anspruchs 1.

In jüngster Vergangenheit wurde bei der Entwicklung von Fahrzeugluftreifen Maßnahmen, die eine deutliche Gewichtsreduktion des Reifens bewirken, verstärkt Augenmerk geschenkt. In diesem Zusammenhang ist beispielsweise bereits vorgeschlagen worden, die Dicke der Innenplatte eines Reifens oder der Seitenwände gegenüber üblichen Reifenkonstruktionen deutlich zu verringern, sowie auch von der Materialseite her, etwa beim Karkassgewebematerial oder dem Verstärkungsmaterial in den Gürtellagen, Gewichtseinsparungen zu erzielen. Es ist ferner bekannt, daß der Laufstreifen einen erheblichen Anteil am Gesamtgewicht eines Reifens hat. Der Laufstreifen erfüllt eine Vielzahl von wichtigen Funktionen, so ist seine Profilierung bzw. die Art seiner Profilierung verantwortlich oder mitverantwortlich für eine Vielzahl von Reifeneigenschaften, wie beispielsweise Abriebsverhalten, Nässeverhalten, Fahrverhalten, Griffeigenschaften und Geräuschemmission. Gewichtsreduzierende Maßnahmen im Laufstreifen selbst zu setzen ist daher schwierig und wurde bisher kaum in Betracht gezogen.

Hier setzt nun die Erfindung ein, deren Aufgabe darin besteht, das Reifengewicht deutlich herabsetzende Maßnahmen unter zumindest weitgehender Beibehaltung des gewünschten Niveaus der Profil- und Reifeneigenschaften auch im Laufstreifen zu setzen.

Gelöst wird die gestellte Aufgabe erfindungsgemäß durch die Merkmale des Anspruchs 1.

Durch die erfindungsgemäße Ausgestaltung des Laufstreifens eines Fahrzeugreifens läßt sich eine deutliche Gewichtsreduktion des Gesamtgewichtes eines Reifens, die in der Größenordnung von mindestens 10 bis 15 % beträgt, erzielen. Die zentrale Ausnehmung erfüllt zudem die Funktion eines sehr breiten Wasserkanales, die asymmetrische Anordnung bezüglich der Äquatorialebene stellt sicher, daß im Außenschulterbereich mehr Laufstreifenoberfläche in der Bodenaufstandsfläche zur Verfügung steht als im Innenschulterbereich, was für das Fahrverhalten und die erwünschte Beibehaltung verschiedener weiterer Reifeneigenschaften bzw. Profileigenschaften von Vorteil ist, da ausreichende Gestaltungsmöglichkeiten für die Profilierung, etwa zur Beeinflussung des Aquaplaningverhaltens in Profilquerrichtung und zur Verringerung des Vorbeifahrgeräusches, zur Verfügung stehen.

Gemäß einer bevorzugten Ausführungsform der Erfindung nimmt die zentrale Ausnehmung mindestens 40 %, höchstens jedoch 60 % des theoretischen Laufstreifenvolumens ein. Damit ist eine merkliche Gewichtsreduktion gegenüber bekannten Laufstreifen erzielbar, wobei die Höchstgrenze nicht überschritten werden sollte, um wichtige Reifeneigenschaften nicht negativ zu beeinflussen.

Bei einer bevorzugten Ausführungsform der Erfindung ist die zentrale Ausnehmung auch bezüglich ihrer Mittellinie M-M, im Querschnitt betrachtet, asymmetrisch gestaltet. Diese Maßnahme gestattet eine günstige Volums- bzw. Gewichtsverteilung der in den beiden Laufstreifenhälften verbleibenden Laufstreifenvolumina.

Die asymmetrische Anordnung der zentralen Ausnehmung bezüglich der Äquatorialebene wird bevorzugt so getroffen, daß die Mittellinie der zentralen Ausnehmung gegenüber der Äquatorialebene zwischen 5 und 20 % der Breite des Laufstreifens in der Bodenaufstandsfläche versetzt ist. Dadurch ist sichergestellt, daß sowohl im Innen- als auch im Außenschulterbereich ausreichend Laufstreifenvolumen und Bodenkontaktfläche verbleibt.

Aus diesem Grund ist es auch günstig, wenn die Anordnung und Auslegung der zentralen Ausnehmung so erfolgt, daß diese in der Bodenaufstandsfläche des Reifens eine Breite besitzt, die höchstens 60 % der Breite in der Bodenaufstandsfläche beträgt.

Es ist ferner günstig, wenn durch die zentrale Ausnehmung das tatsächliche Laufstreifenvolumen in den beiden Laufstreifenhälften beidseitig der Äquatorialebene derart verteilt wird, daß zwischen 55 und 70 % des tatsächlichen Laufstreifenvolumens in jenem Laufstreifenbereich ist, der bei Anordnung des Reifens auf einem Fahrzeug der Fahrzeuglängsachse abgewandt ist.

Aus Stabilitätsgründen sollten ferner die Flanken der zentralen Ausnehmung abgeflacht sein und einen Winkel von mindestens 5° mit der Äquatorialebene einschließen.

Jene Bereiche des Laufstreifens, die mit dem Untergrund beim Abrollen des Reifens in Berührung kommen sollten einen relativ hohen Positivanteil besitzen. Dabei wird der Positivanteil im Laufstreifenaußenbereich mindestens 70 %, bevorzugt mindestens 80 % und im Laufstreifeninnenbereich um 5 bis 15 % kleiner gewählt als im Laufstreifenaußenbereich.

Die Profilierung in den mit dem Untergrund in Kontakt tretenden Laufstreifenbereichen beidseitig der zentralen Ausnehmung umfaßt bevorzugt schräg oder im wesentlichen quer orientierte schmale Nuten oder Feineinschnitte. Dadurch wird die Wasserableitung in Querrichtung unterstützt.

Für das Fahrverhalten und die Eignung des Reifens auch für höhere Geschwindigkeiten ist es von Vorteil, wenn im Bereich unterhalb der zentralen Ausnehmung eine zusätzliche Gürtelabdecklage, insbesondere eine mit wärmeschrumpffähigen Fäden versehene Bandagenlage angeordnet ist, deren Breite größer ist als die Breite der zentralen Ausnehmung.

Zumindest jener Bereich des Laufstreifens, welcher mit dem Untergrund während des Abrollens des Reifens in Berührung kommt, sollte ferner aus einer abriebsbeständigen Mischung gefertigt sein, um eine gute Reifenlebensdauer sicherzustellen.

Weitere Merkmale, Vorteile und Einzelheiten der Erfindung werden nun anhand der Zeichnung, die mehrere Ausführungsbeispiele darstellt, näher beschrieben. Dabei zeigen Fig. 1 und Fig. 2 schematisch Querschnitte durch Ausführungsvarianten eines Reifens im Laufstreifenbereich und Fig. 3 schematisch eine Draufsicht auf einen Ausschnitt eines Laufstreifenprofiles.

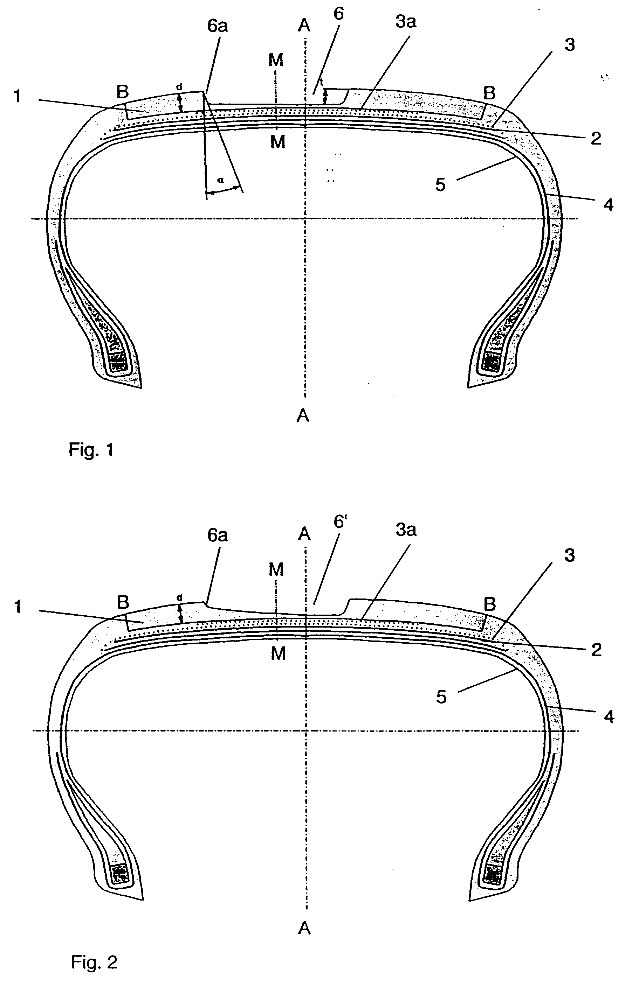

Wie aus Fig. 1 ersichtlich ist umfaßt der Fahrzeugluftreifen im dargestellten Querschnitt im wesentlichen einen Laufstreifen 1, einen Gürtelverband 2, welcher sich aus zwei stahlcordverstärkten Gürtellagen zusammensetzt, eine Bandage 3 sowie eine ein- oder zweilagige Karkasse 4 und eine Innenplatte 5.

Gemäß der vorliegenden Erfindung besitzt der Laufstreifen 1 eine zentrale, in Umfangsrichtung umlaufende Ausnehmung 6, die bezüglich der Äquatorialebene A-A des Reifens asymmetrisch angeordnet ist und diese Ebene einschließt. Die Ausnehmung 6 besitzt eine Mittellinie M-M und ist bezüglich dieser Mittellinie M-M symmetrisch gestaltet. Die Ausnehmung 6 nimmt mindestens 35 %, insbesondere mindestens 40 % und bis zu 60 % des theoretischen Laufstreifenvolumens, welches im folgenden näher erklärt wird, ein.

Unter theoretischem Laufstreifenvolumen ist jenes Volumen zu verstehen, welches zwischen der Außenfläche des Laufstreifens, wobei die Volumina der zentralen Ausnehmung 6 und sonstiger Nuten und/oder Einschnitte unter Fortsetzung der Kontur der beidseitig der zentralen Ausnehmung 6 verlaufenden Laufstreifenbereiche miteinbezogen sind, innerhalb der Breite in der Bodenaufstandsfläche gemäß ETRTO-Standards (in Fig. 1 versinnbildlicht durch die Punkte B), einer in der Tiefe d zur Außenfläche zumindest im wesentlichen parallel verlaufenden Innenfläche und seitlichen Begrenzungsflächen, die in den Normalen zu Tangenten an die Grenzlinien (Punkte B) der Bodenaufstandsfläche verlaufen, bestimmt wird. Der Abstand d entspricht der Dicke des Laufstreifens 1, wobei es unerheblich ist, ob der Laufstreifen einteilig oder mehrteilig, wie es beispielsweise bei Cap-Base-Konstruktionen der Fall ist, aufgebaut ist.

Die Mittelumfangslinie M-M der zentralen Ausnehmung 6 ist gegenüber der Äquatorialebene A-A in einem Bereich von mindestens 5 % bis zu höchstens 20 % der Breite in der Bodenaufstandsfläche versetzt. Die Tiefe t der Ausnehmung 6 wird bevorzugt so gewählt, daß sie der üblichen Dessintiefe, also ca. 8 mm, entspricht. Die zentrale Ausnehmung 6 kann jedoch auch mit einer geringeren Tiefe oder einer etwas größeren Tiefe versehen werden, wobei jedoch unterhalb des Bodens der zentralen Ausnehmung 6 eine gewisse Mindestgummidicke von 0,5 bis 2 mm verbleiben sollte. Die zentrale Ausnehmung 6 wird, um den erfindungsgemäßen Effekt der Gewichtsreduzierung sicherzustellen, über einen Großteil ihrer Breite in ihrer vorgesehenen Maximaltiefe ausgeführt und ferner mit Flankenbereichen 6a versehen, die einen Winkel α von mindestens 5° mit der radialen Richtung einschließen. Diese Maßnahme ist aus Stabilitätsgründen von Vorteil.

Wie schon oben erwähnt wird der Gürtelverband 2 des Reifens mit einer Bandage 3 abgedeckt. Diese in herkömmlicher Art ausführbare Bandage 3 kann somit als zumindest über die Gesamtbreite des Gürtelverbandes 2 verlaufende ein- oder mehrlagige Bandagenlage, bestehend aus gummierten wärmeschrumpffähigen Fäden, insbesondere Nylon, ausgeführt sein oder als sogenannte Spulbandage, bei der ein gummierter Streifen der ebenfalls Nylonfäden oder dergleichen enthält, um den Gürtelverband 2 gewickelt wird. Dabei kann es für die Hochgeschwindigkeitshaltbarkeit des Reifens von Vorteil sein, wenn zumindest im Bereich unterhalb der zentralen Ausnehmung 6 eine gesonderte Bandagenlage 3a, die bevorzugt geringfügig breiter ist als die Breite der zentralen Ausnehmung 6, angeordnet wird.

Durch die asymmetrische Anordnung der zentralen Ausnehmung 6 bezüglich der Äquatorialebene A-A ist auf der einen Seite der Äquatorialebene A-A sowohl ein größeres Laufstreifenvolumen als auf der anderen als auch eine größere Gesamtaußenfläche vorhanden. Der Reifen wird derart am Fahrzeug angeordnet, daß die Laufstreifenhälfte mit dem größeren Volumen und der größeren Außenfläche jene ist, die der Fahrzeuglängsache abgekehrt liegt. Die Volumsaufteilung im Zusammenhang mit der Anordnung der zentralen Ausnehmung 6 erfolgt bevorzugt derart, daß zwischen 55 bis 70 % des tatsächlichen Laufstreifenvolumens im Laufstreifenaußenbereich vorliegt. In der im Laufstreifenaußenbereich vorhandenen und für eine Profilierung geeigneten Außenfläche soll der Positivanteil, das heißt der Anteil an der Gesamtfläche, die dort mit dem Untergrund in Berührung kommt, größer sein als im entsprechenden Bereich der Laufstreifeninnenschulter. Dabei wird der Positivanteil im Laufstreifenaußenbereich mindestens 70 %, bevorzugt mindestens 80 % gewählt. An der Innenschulter wird ein Positivanteil gewählt, der bevorzugt kleiner, etwa um 5 bis 15 % kleiner ist als im Laufstreifenaußenbereich bzw. in der Außenschulter.

Das Ausführungsbeispiel gemäß Fig. 2 unterscheidet sich von jenem gemäß Fig. 1 dadurch, daß die zentrale Ausnehmung 6' nicht nur asymmetrisch bezüglich der Äquatorialebene A-A angeordnet ist, sondern bezüglich ihrer Mittellinie M-M im Querschnitt asymmetrisch gestaltet ist. Wie dargestellt kann dazu eine der beiden Flanken der zentralen Ausnehmung 6' unter einem wesentlich größeren Winkel zur Radialrichtung verlaufen als die zweite Flanke, wobei die Anordnung bevorzugt so getroffen wird, daß die flacher und auch länger ausgeführte Flanke vom Innenschulterbereich aus beginnt, wodurch das Laufstreifenvolumen in diesem Laufstreifenbereich erhöht wird. Im Idealfall wird darauf geachtet, das beidseitig der Äquatorialebene A-A die tatsächlichen Laufstreifenvolumina etwa gleich groß sind. Diese Maßnahme ist für die Gesamtstabilität und auch das Fahrverhalten des Reifens von Vorteil. Ansonsten entspricht das Ausführungsbeispiel gemäß Fig. 2 jenem gemäß Fig. 1, so daß auf eine weitere gesonderte Beschreibung verzichtet wird.

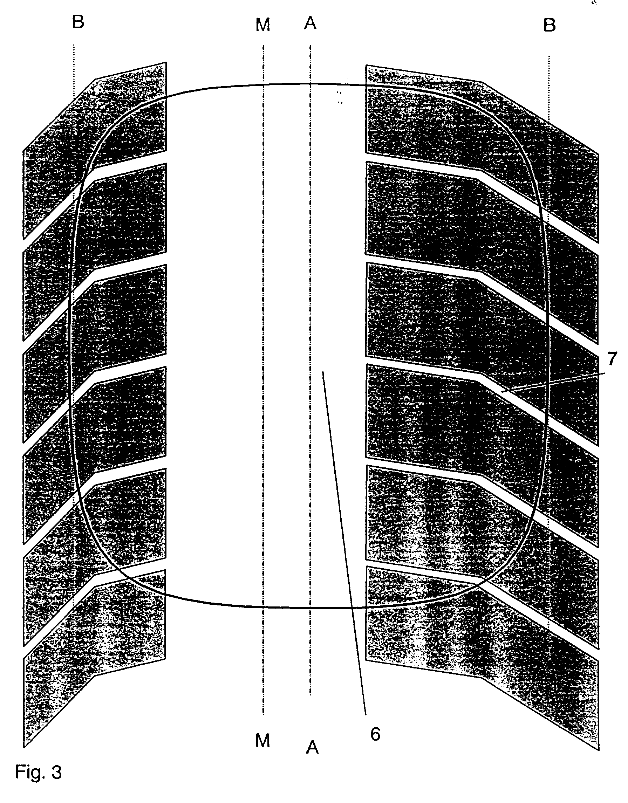

Fig. 3 zeigt schematisch eine mögliche Gestaltung des Laufstreifenprofiles im bodenberührenden Bereich der Laufstreifeninnen- und der Laufstreifenaußenschulter. In beiden Laufstreifenbereichen erfolgt vorzugsweise nur eine Profilierung durch schmale, eher in Querrichtung orientierte Nuten 7 oder auch durch solche Feineinschnitte, im vorliegenden Ausführungsbeispiel wurde eine Gestaltung gewählt, die ein laufrichtungsgebundenes Profil ergibt. Die Breite der schmalen Nuten 7 sollte etwa 1 bis 2 mm betragen, werden nur Feineinschnitte vorgesehen so werden diese in einer der üblichen Breiten, etwa von 0,4 bis 0,8 mm ausgeführt.

Die Querschnittskontur des Reifens, insbesondere auch die Laufstreifenkontur, wird bevorzugt so ausgelegt, daß bei der Verformung des Reifens während des Abrollens der Rollwiderstand möglichst gering ist.

Es ist günstig, wenn der Laufstreifen bzw. jener Teil des Laufstreifens, welcher am Untergrund abrollt, aus einer abriebsbeständigen Mischung gerfertigt wird. Dazu eignen sich beispielsweise Kautschukmischungen, die einen hohen Anteil an Polybutadien-Kautschuk besitzen und deren Rußanteil nicht zu hoch, insbesondere bis zu 60 Gewichtsteile Ruß auf 100 Gewichtsteile Kautschuk in der Mischung, gewählt wird. Dabei kann es ferner von Vorteil sein, wenn, über den Querschnitt des Laufstreifens betrachtet, unterschiedliche Gummimischungen verwendet werden, beispielsweise im Bereich der zentralen Ausnehmung eine andere Mischung eingesetzt wird als in den schulterseitig gelegenen Laufstreifenbereichen.

## Patentansprüche

1. Fahrzeugreifen mit einem profilierten Laufstreifen, mit einem Paar von Seitenwänden, einem Paar von verstärkten Wulstbereichen, einer zumindest einlagigen Karkasse und einem Gürtel aus mindestens zwei, Festigkeitsträger aufweisenden Lagen, wobei der Laufstreifen eine breite, zentrale, in Umfangsrichtung umlaufende und die Äquatorialebene des Reifens einschließende Ausnehmung (6,6') besitzt, welche bezüglich der Äquatorialebene (A-A) asymmetrisch angeordnet ist, und wobei der Reifen derart am Fahrzeug anzubringen ist, daß jener an die zentrale Ausnehmung (6,6') anschließende Profilbereich, welcher die größere Gesamtaußenfläche besitzt, der Fahrzeuglängsachse abgewandt ist, dadurch gekennzeichnet, daß die zentrale Ausnehmung (6,6') mindestens 35 % des theoretischen Laufstreifenvolumens einnimmt.

2. Fahrzeugreifen nach Anspruch 1, dadurch gekennzeichnet, daß die zentrale Ausnehmung (6, 6') mindestens 40 %, höchstens jedoch 60 % des theoretischen Laufstreifenvolumens einnimmt.

3. Fahrzeugreifen nach Anspruch 1 oder 2, dadurch gekennzeichnet, daß die zentrale Ausnehmung bezüglich ihrer Mittellinie M-M, im Querschnitt betrachtet, asymmetrisch gestaltet ist.

4. Fahrzeugreifen nach einem der Ansprüche 1 bis 3, dadurch gekennzeichnet, daß die Mittellinie (M-M) der zentralen Ausnehmung (6, 6') gegenüber der Äquatorialebene (A-A) zwischen 5 und 20 % der Breite des Laufstreifens in der Bodenaufstandsfläche versetzt ist.

5. Fahrzeugreifen nach einem der Ansprüche 1 bis 4, dadurch gekennzeichnet, daß die zentrale Ausnehmung (6, 6') in der Bodenaufstandsfläche des Reifens eine Breite besitzt, die höchstens 60 % der Breite in der Bodenaufstandsfläche beträgt.

6. Fahrzeugreifen nach einem der Ansprüche 1 bis 5, dadurch gekennzeichnet, daß durch die zentrale Ausnehmung (6, 6') das tatsächliche Laufstreifenvolumen in den beiden Laufstreifenhälften beidseitig der Äquatorialebene derart verteilt wird, das zwischen 55 und 70 % des tatsächlichen Laufstreifenvolumens in jenem Laufstreifenbereich ist, der bei Anordnung des Reifens auf einem Fahrzeug der Fahrzeuglängsachse abgewandt ist.

7. Fahrzeugreifen nach einem der Ansprüche 1 bis 6, dadurch gekennzeichnet, daß die Flanken der zentralen Ausnehmung (6, 6') abgeflacht sind und einen Winkel (α) von mindestens 5° mit der Äquatorialebene (A-A) einschließen.

8. Fahrzeugreifen nach einem der Ansprüche 1 bis 7, dadurch gekennzeichnet, daß der Positivanteil im Laufstreifenaußenbereich mindestens 70 %, bevorzugt mindestens 80 % ist und im Laufstreifeninnenbereich um 5 bis 15 % kleiner gewählt wird als im Laufstreifenaußenbereich.

9. Fahrzeugreifen nach einem der Ansprüche 1 bis 8, dadurch gekennzeichnet, daß die beim Abrollen des Reifens mit dem Untergrund in Kontakt tretenden Laufstreifenbereiche schräg oder im wesentlichen quer orientierte schmale Nuten (7) oder Feineinschnitte besitzen.

10. Fahrzeugreifen nach einem der Ansprüche 1 bis 9, dadurch gekennzeichnet, daß im Bereich unterhalb der zentralen Ausnehmung (6, 6') eine zusätzliche Gürtelabdecklage (3a), insbesondere eine mit wärmeschrumpffähigen Fäden versehene Bandagenlage angeordnet ist, deren Breite größer ist als die Breite der zentralen Ausnehmung (6, 6').

11. Fahrzeugreifen nach einem der Ansprüche 1 bis 10, dadurch gekennzeichnet, daß die mit dem Untergrund in Kontakt tretenden Laufstreifenbereiche aus einer abriebsbeständigen Kautschukmischung gefertigt sind.

## Claims

1. Vehicle tyre, having a profiled tread strip, a pair of sidewalls, a pair of reinforced bead regions, a carcase which is at least single-ply, and a belt formed from at least two plies provided with reinforcing members, the tread strip having a wide, central recess (6, 6'), which extends in the circumferential direction and includes the central plane of the tyre, said recess being disposed asymmetrically relative to the central plane (A-A), and the tyre having to be mounted on the vehicle in such a manner that the profile region, which communicates with the central recess (6, 6') and has the greater overall external area, faces away from the longitudinal axis of the vehicle, characterised in that the central recess (6, 6') occupies at least 35 % of the theoretical tread strip volume.

2. Vehicle tyre according to claim 1, characterised in that the central recess (6, 6') occupies at least 40 %, but at most 60 %, of the theoretical tread strip volume.

3. Vehicle tyre according to claim 1 or 2, characterised in that the central recess has an asymmetrical configuration in respect of its centre line M-M, when viewed in cross-section.

4. Vehicle tyre according to one of claims 1 to 3, characterised in that the centre line (M-M) of the central recess (6, 6') is offset from the central plane (A-A) by between 5 and 20% of the width of the tread strip in the, ground engaging surface.

5. Vehicle tyre according to one of claims 1 to 4, characterised in that the central recess (6,6') in the ground engaging surface of the tyre has a width which amounts at most to 60 % of the width in the ground engaging surface.

6. Vehicle tyre according to one of claims 1 to 5, characterised in that the actual tread strip volume in the two tread strip halves on each side of the central plane is divided by the central recess (6, 6') in such a manner that said volume is between 55 and 70 % of the actual tread strip volume in the tread strip region which faces away from the longitudinal axis of the vehicle when the tyre is disposed on a vehicle.

7. Vehicle tyre according to one of claims 1 to 6, characterized in that the sides of the central recess (6, 6') are flattened and form an angle (α) of at least 5° with the central plane (A-A).

8. Vehicle tyre according to one of claims 1 to 7, characterised in that the positive proportion in the external tread strip region is at least 70 %, preferably at least 80 %, and it is selected to be 5 to 15 % smaller in the internal tread strip region than in the external tread strip region.

9. Vehicle tyre according to one of claims 1 to 8, characterized in that the tread strip regions, which come into contact with the underlying ground during the rolling of the tyre, have narrow grooves (7) or fine incisions which are inclinedly or substantially transversely orientated.

10. Vehicle tyre according to one of claims 1 to 9, characterised in that an additional belt cover ply (3a), more especially a bandage ply provided with heat-shrinkable filaments, is disposed in the region beneath the central recess (6, 6'), the width of said ply being greater than the width of the central recess (6, 6').

11. Vehicle tyre according to one of claims 1 to 10, characterized in that the tread strip regions, which come into contact with the underlying ground, are manufactured from a wear-resistant rubber mixture.

## Revendications

1. Pneumatique pour véhicule comportant une bande de roulement profilée, un couple de parois latérales, un couple de parties renforcées de talon, une carcasse à au moins une couche et une ceinture constituée par au moins deux couches comportant des supports de renfort, et dans lequel la bande de roulement possède un évidement central large (6, 6'), qui s'étend dans la direction circonférentielle, englobe le plan équatorial du pneumatique et est disposé d'une manière dissymétrique par rapport au plan équatorial (A-A), et dans lequel le pneumatique doit être monté sur le véhicule de telle sorte que la zone de la sculpture, qui jouxte l'évidement central (6, 6') et possède une surface extérieure totale plus étendue, est tournée à l'opposé de l'axe longitudinal du véhicule, caractérisé en ce que l'évidement central (6,6') occupe au moins 35 % du volume théorique de la bande de roulement.

2. Pneumatique pour véhicule selon la revendication 1, caractérisé en ce que l'évidement central (6, 6') occupe au moins 40 %, mais au maximum 60 % du volume théorique de la bande de roulement.

3. Pneumatique pour véhicule selon la revendication 1 ou 2, caractérisé en ce que l'évidement central est agencé de façon dissymétrique par rapport à sa ligne médiane (M-M), lorsqu'on regarde une coupe transversale.

4. Pneumatique pour véhicule selon l'une des revendications 1 à 3, caractérisé en ce que la ligne médiane (M-M) de l'évidement central (6, 6') est décalée, par rapport au plan équatorial (A-A), d'une valeur comprise entre 5 et 20 % de la largeur de la bande de roulement dans la surface d'appui au sol.

5. Pneumatique pour véhicule selon l'une des revendications 1 à 4, caractérisé en ce que l'évidement central (6, 6') possède, dans la surface d'appui au sol du pneumatique, une largeur qui est égale au maximum à 60 % de la largeur dans la surface d'appui au sol.

6. Pneumatique pour véhicule selon l'une des revendications 1 à 5, caractérisé en ce que le volume effectif de la bande de roulement est réparti, par l'évidement central (6,6'), entre les deux moitiés de la bande de roulement des deux côtés du plan équatorial de telle sorte qu'entre 55 et 70 % du volume effectif de la bande de roulement est situé dans la zone de la bande de roulement, qui est tournée à l'opposé de l'axe longitudinal du véhicule, lors du montage du pneumatique sur un véhicule.

7. Pneumatique pour véhicule selon l'une des revendications 1 à 6, caractérisé en ce que les flancs de l'évidement central (6, 6') sont aplatis et font un angle (α) égal au moins à 5° avec le plan équatorial (A-A).

8. Pneumatique pour véhicule selon l'une des revendications 1 à 7, caractérisé en ce que la partie positive dans la zone extérieure de la bande de roulement est égale au moins à 70 % et de préférence au moins à 80 % et est choisie par rapport à la zone intérieure de la bande de roulement, à une valeur 5 à 15 % plus petite que dans le cas de la zone extérieure de la bande de roulement.

9. Pneumatique pour véhicule selon l'une des revendications 1 à 8, caractérisé en ce que les zones de la bande de roulement, qui viennent en contact avec le sol lors du roulement du pneumatique, Possèdent des rainures étroites (7) ou de fines entailles disposées obliquement ou orientées essentiellement transversalement.

10. Pneumatique pour véhicule selon l'une des revendications 1 à 9, caractérisé en ce que dans la zone située au-dessous de l'évidement central (6, 6') est disposée une couche supplémentaire de revêtement de ceinture (3a), notamment une couche de bandage pourvue de fils thermorétractables et dont la largeur est supérieure à la largeur de l'évidement central (6, 6').

11. Pneumatique selon pour véhicule selon l'une des revendications 1 à 10, caractérisé en ce que les zones de la bande de roulement, qui viennent en contact avec le sol, sont réalisés en un mélange de caoutchouc résistant à l'usure par frottement.
